Europäisches Patentamt

European Patent Office

Office européen des brevets

(19)

(11) Publication number: **0 048 097**
**B1**

## EUROPEAN PATENT SPECIFICATION

(12)

(45) Date of publication of patent specification: **29.02.84**

(21) Application number: **81303894.0**

(22) Date of filing: **26.08.81**

(51) Int. Cl.³: **B 01 J 3/02**, B 01 J 4/00, C 10 G 7/00

(54) Refinery fuel gas system.

(30) Priority: **04.09.80 DE 3033238**

(43) Date of publication of application:
**24.03.82 Bulletin 82/12**

(45) Publication of the grant of the patent:
**29.02.84 Bulletin 84/9**

(84) Designated Contracting States:
**BE DE FR GB IT NL**

(56) References cited:
**CH - A - 472 644**
**DE - B - 1 228 742**
**US - A - 2 996 892**
**US - A - 3 135 221**
**US - A - 3 392 753**

(73) Proprietor: **MOBIL OIL CORPORATION**
**150 East 42nd Street**
**New York New York 10017 (US)**

(72) Inventor: **Lenske, Guenther**
**Lerchenweg 7**
**D-6729 Ruelzheim (DE)**

(74) Representative: **West, Alan Harry et al,**
**Mobil Court 3 Clements Inn**
**London WC2A 2EB (GB)**

Courier Press, Leamington Spa, England.

Refinery fuel gas system

This invention relates to a method and apparatus for feeding petroleum refinery gases into the fuel gas system of the refinery.

The light hydrocarbon gases ("overheads") obtained from the atmospheric distillation of crude oil in petroleum refineries may be fed into the fuel gas system of the refinery, using rotary or reciprocating compressors to bring the gases up to the pressure of the fuel gas system. Alternatively, if these gases are not fed into the fuel gas system they have to be flared and this represents a loss of useful energy.

Other gases which may also be fed into the fuel gas system include the process gases which are produced in the reformer, desulfurizing, cracking and liquid gas plants. Because these process gas streams are obtained at relatively high pressure with a relatively high energy content they may be fed directly into the fuel gas system although in most cases it is necessary to pass these gases through a throttle to bring their pressure down to that of the fuel gas system.

We have now devised a method and an apparatus for utilizing the low pressure, light hydrocarbon refinery gases in the fuel gas system which avoids the necessity of using additional sources of energy to bring these gases to the higher pressures of the fuel gas system. According to the present invention, the energy which is necessary for compressing the low pressure refinery gases is derived from the process gases which are usually available at relatively high pressures and, in that condition, are capable of performing useful work. A gas jet compressor (gas ejector) is preferably used for this purpose.

When the high pressure process gases are expanded through a throttle to reduce them to the lower pressure of the fuel gas system, the specific work that could be theoretically performed by the process gases during the expansion namely, the integral of the change in volume summed over the pressure differential, is not usefully employed. This, in turn, means that energy is lost during the expansion by heat dissipation. According to the present invention the potential energy of the high pressure gases is not dissipated during the expansion but rather, is used to act as the propellant gas for the gas jet compressor. There is then a transfer of energy to the fuel gas system. Use of the potential mechanical energy of the process gases in this way enables the low pressure refinery gases to be drawn into the suction side of the gas jet compressor and, from there, to be fed into the fuel gas system together with the propellant gas.

The gas streams may require to be freed from sulfur in the form of hydrogen sulfide by scrubbing in an absorber, depending upon their degree of purity. This may be done by conducting the output from the gas compressor either into the sour gas system before scrubbing and into the sweet gas system after scrubbing. Alternatively, if the gases are sufficiently free of sulfur-containing impurities, they may be fed directly into the sweet gas system. It is also possible to conduct one part of the gas into the sour gas system and the other part into the sweet gas system. The selection among these possibilities is governed, amongst other factors, by the ratio of the amount of propellant gas to the amount of sour gas. Under otherwise similar conditions on the propellant side and suction side of the compressor, the amount of low pressure gas which can be drawn in will be greater at lower pressures on the fuel gas (exhaust) side. After scrubbing, the pressure will be lower than before scrubbing i.e. the pressure will be lower in the sweet gas system than in the sour gas system.

The use of the gas jet compressor is highly advantageous compared to that of rotary and piston type compressors. The operating costs of rotary and reciprocating compressors are relatively high and, in addition, their mechanical parts are subject to failure, particularly when the gas volumes change, liquid impacts occur or the gases contain suspended liquid droplets. The operating and maintenance costs for a gas jet compressor, on the other hand, are negligible as the device does not have any mechanical parts which are subject to wear.

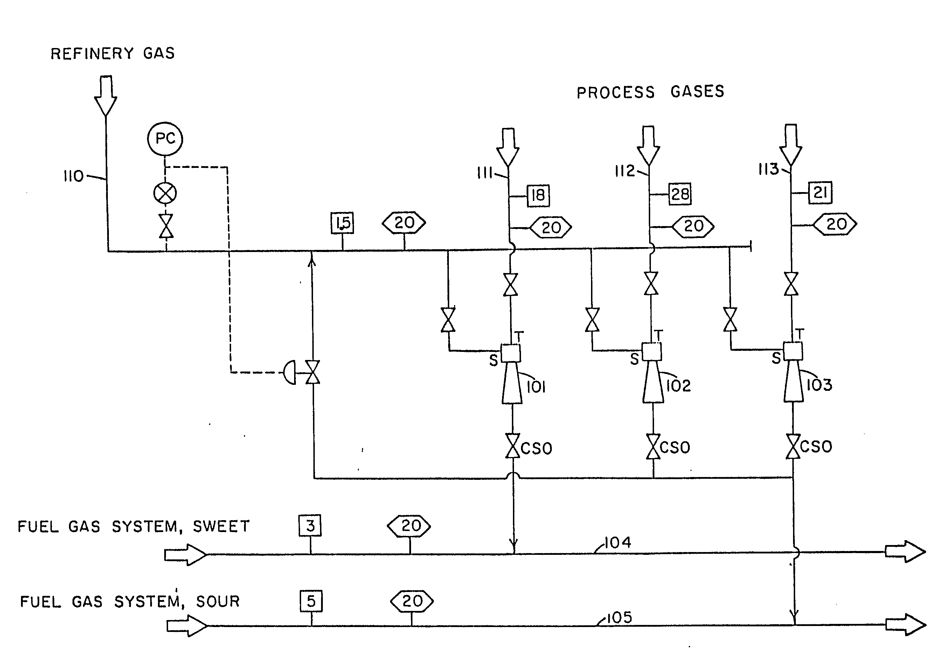

The single figure of the accompanying drawings shows a schematic representation of a refinery gas system in which the low pressure gases are fed into the fuel gas system by means of a gas jet compressor.

In the square boxes of the Figure the respective pressures are indicated in bars and in the hexagonal boxes the respective temperatures are indicated in degrees Celsius.

In the Figure, three gas jet compressors (101, 102, 103) are shown, each compressor having a suction side S and a propellant gas side T.

The refinery gas is conducted through a line 110 to the suction sides of the gas jet compressors 101, 102, and 103. The refinery gas is, for example, the low pressure gas coming from an atmospheric distillation column. The pressure at the suction side is indicated as 1.5 bar.

The first gas jet compressor 101 is connected on its propellant gas side to a line 111 supplying process gas from a reformer. Correspondingly, process gas is conducted in line 112 from the liquid gas plant to the gas jet compressor 102 and gas from the cracker liquid gas plant is conducted in line 113 to the gas jet compressor 103. The indicated pressures on the propellant gas sides are in the range between 18 and 28 bars.

Gas jet compressor 101 is directly connected through valve CSO to a line 104 of the fuel gas system for sweet fuel gas because,

2

according to experience, sweet gas can be supplied from the reformer. Correspondingly, a connection is provided from the gas jet compressors 102 and 103 through valves CSO to a line 105, the latter being a line of the fuel gas system for sour fuel gas. Accordingly, it is indicated by an arrow that this fuel gas is passed on to H$_2$S scrubbing and is intended for consumption only after scrubbing.

A feedback line runs from gas jet compressors 102 and 103 to the suction side, and this can be actuated through a suitable pressure controller PC.

## Claims

1. A method of feeding refinery gases from low pressure systems into the fuel gas system of a refinery which is operated at high pressure, by compressing the refinery gases by means of a gas jet compressor employing as propellant the high pressure gases produced in the refinery and intended for use in the fuel gas system.

2. A refinery fuel gas system in which a gas jet compressor used for feeding low pressure refinery gas into the fuel gas system has (i) its propellant gas inlet connected to the source of high pressure gases produced in the refinery and intended for use in the fuel gas system and (ii) its suction inlet connected to a source of the low pressure refinery gas.

3. A refinery fuel gas system according to claim 2 in which the source of high pressure gases comprises the reformer, the liquid gas plant or the cracker in the refinery.

4. A refinery fuel gas system according to claim 2 or 3 in which the outlet of the gas jet compressor is connected to the sweet fuel gas system of the refinery.

5. A refinery fuel gas system according to claim 2 or 3 in which the outlet of the gas jet compressor is connected to the sour fuel gas system of the refinery on the inlet side of a scrubber for sweetening the gas.

## Patentansprüche

1. Verfahren zur Einspeisung von Raffineriegasen aus Niederdruck-Systemen in das Heizgas-System einer Raffinerie, das bei hohem Druck betrieben wird, durch Verdichten der Raffineriegase mittels eines Gas-Strahlkompressors, bei dem als Treibmittel die Hochdruckgase verwendet werden, die in der Raffinerie erzeugt werden und für die Verwendung in dem Heizgas-System bestimmt sind.

2. Ein Raffinerie-Heizgas-System, bei dem bei einem Gas-Strahlkompressor für die Einspeisung von Niederdruck-Raffineriegas in das Heizgas-System (i) dessen Treibgaseinlaß mit der Quelle für Hochdruckgase verbunden ist, die in der Raffinerie erzeugt werden und für die Verwendung in dem Heizgas-System bestimmt sind, und (ii) dessen saugseitiger Einlaß mit einer Quelle für das Niederdruck-Raffineriegas verbunden ist.

3. Ein Raffinerie-Heizgas-System nach Anspruch 2, bei dem die Quelle für die Hochdruckgase den Reformer, die Flüssiggasanlage oder den Cracker in der Raffinerie umfaßt.

4. Ein Raffinerie-Heizgas-System nach Anspruch 2 oder 3, bei dem der Auslaß des Gas-Strahlkompressors mit dem System für das gesüßte Heizgas der Raffinerie verbunden ist.

5. Ein Raffinerie-Heizgas-System nach Anspruch 2 oder 3, bei dem der Auslaß des Gas-Strahlkompressors mit dem System für das saure Heizgas der Raffinerie an der Einlaßseite eines Gaswäschers zum Süßen des Gases verbunden ist.

## Revendications

1. Procédé d'introduction de gaz de raffinerie provenant de circuit à basse pression dans un circuit de gaz combustible d'une raffinerie qui fonctionne à haute pression, par compression des gaz de raffinerie à l'aide d'un compresseur à éjecteurs utilisant, comme propulseur, les gaz à haute pression produits dans la raffinerie et destinés à être utilisés dans le circuit de gaz combustible.

2. Circuit de gaz combustible de raffinerie dans lequel un compresseur à éjecteurs de gaz utilisé pour l'introduction de gaz de raffinerie à basse pression dans le circuit de gaz combustible a (i) son entrée de gaz propulseur connectée à la source de gaz à haute pression produits dans la raffinerie et destinés à être utilisés dans le circuit de gaz combustible, et (ii) son entrée d'aspiration connectée à une source du gaz de raffinerie à basse pression.

3. Circuit de gaz combustible de raffinerie selon la revendication 2, dans lequel la source de gaz à haute pression est le réformeur, l'installation liquide-gaz ou le réacteur de craquage de la raffinerie.

4. Circuit de gaz combustible de raffinerie selon l'une des revendications 2 et 3, dans lequel la sortie du compresseur à éjecteurs est connectée au circuit de gaz combustible inactif de la raffinerie.

5. Circuit de gaz combustible de raffinerie selon l'une des revendications 2 et 3, dans lequel la sortie du compresseur à éjecteurs de gaz est connectée au circuit de gaz combustible corrosif de la raffinerie du côté d'entrée d'un épurateur destiné à purifier le gaz.

REFINERY GAS

PROCESS GASES

PC

110

111    112    113

18    28    21

15    20    20    20    20

T      T      T
S 101  S 102  S 103

CSO    CSO    CSO

FUEL GAS SYSTEM, SWEET    3    20    104

FUEL GAS SYSTEM, SOUR    5    20    105

0 048 097